# EUROPÄISCHE PATENTANMELDUNG

(11) **EP 1 184 433 A2**
(43) Veröffentlichungstag der Anmeldung: **06.03.2002**
(21) Anmeldenummer: 01116974.5
(22) Anmeldetag: 12.07.2001
(51) Int. Cl.: C09D 175/06, C08G 18/80, C08G 18/42

(54) **Matte PUR-Pulverlacke**

(30) Priorität: 29.08.2000 DE 10042318
(71) Anmelder: Degussa AG, 40474 Düsseldorf (DE)
(72) Erfinder: Weiss, Jörn Volker, Dr., 45721 Haltern (DE); Grenda, Werner, 44627 Herne (DE)

(57) **Zusammenfassung**

Die Erfindung beschreibt neue matte Polyurethan-Pulverlacke aus Polyharnstoffen, Polyestern und Vernetzern.

## Beschreibung

Die Erfindung beschreibt neue matte Polyurethan-Pulverlacke aus Polyharnstoffen, Polyestern und Vernetzern.

Seit geraumer Zeit gibt es ein zunehmendes Interesse an Pulverlacken, die eine matte Oberfläche ergeben. Die Ursache dafür ist überwiegend praktischer Art. Glänzende Flächen erfordern ein weitaus höheres Maß an Reinigung als matte Flächen. Darüber hinaus kann es aus sicherheitstechnischen Gründen wünschenswert sein, stark reflektierende Flächen zu vermeiden.

Das einfachste Prinzip, eine matte Oberfläche zu erhalten, besteht darin, dem Pulverlack je nach Ausmaß des gewünschten Matteffektes kleinere oder größere Mengen Füllstoffe, wie z. B. Kreide, fein verteiltes Siliciumoxid oder Bariumsulfat, beizumischen. Diese Zusätze bewirken jedoch eine Verschlechterung der lacktechnischen Filmeigenschaften, wie Haftung, Flexibilität, Schlagfestigkeit und Chemikalienbeständigkeit.

Die Zugabe von Stoffen, die mit dem Lack unverträglich sind, wie z. B. Wachse oder Cellulosederivate, bewirkt zwar deutlich eine Mattierung, aber geringfügige Änderungen während des Extrudierens führen zu Schwankungen im Oberflächenglanz. Die Reproduzierbarkeit des Matteffektes ist nicht gewährleistet.

Harnstoff- und uretdiongruppenhaltige Polyisocyanate sind erst seit kurzer Zeit bekannt. Die DE-OS 195 46 750 beansprucht Reaktionsprodukte aus Isophorondiisocyanat-Uretdion und disekundären Diaminen als Härter zur Herstellung von Polyurethan (PUR)-Beschichtungen mit glänzenden Oberflächen.

In der DE-OS 196 30 844 werden erstmals matte PUR-Pulverlacke beschrieben, die harnstoffgruppenhaltige Isophorondiisocyanat-Uretdione als Härterkomponente enthalten. Sie werden durch die Umsetzung von Uretdionen mit Wasser hergestellt. Dabei bilden sich intermediär unter Abspaltung von Kohlendioxid primäre Amine, die sich mit noch vorhandenen Isocyanatgruppen zu Harnstoffen umsetzen. Die Stickstoffatome der Harnstoffgruppen sind jeweils monosubstituiert. Reaktionen von Polyisocyanaten mit Wasser sind aufgrun der Bildung von Nebenprodukten schwierig zu reproduzieren.

Die DE-OS 196 37 375 beschreibt PUR-Pulverlacke, die durch harnstoffgruppenhaltige Isophorondiisocyanat-Uretdione als Härter mattierend eingestellt werden. Diese Härter entstehen durch die Umsetzung von Isophorondiisocyanat-Uretdion mit disekundären Diaminen. Die disekundären Diamine sind Umsetzungsprodukte aus diprimären Diaminen und Malein-oder Fumarsäureestern.

In der DE-OS 196 37 377 und in der DE-OS 198 16 547 werden uretdiongruppen- und harnstoffgruppenhaltige Polyadditionsprodukte als Härterkomponente zur Mattierung von PUR-Pulverlacken beansprucht. Die Herstellung dieser Härter erfolgt durch die Umsetzung von Isophorondiisocyanat-Uretdion mit Diaminen, die eine primäre und sekundäre Aminogruppen enthalten. Die Herstellung der reinen Diamine ist z. T. komplex und recht kostenintensiv.

Es bestand die Aufgabe, neue matte PUR-Pulverlacke zu finden, die einfach herstellbar sind und der Matteffekt beliebig einstellbar sein sollte bei gleich bleibenden guten mechanischen Eigenschaften der Pulverlack-beschichtungen.

Die Aufgabe wurde durch die erfindungsgemäßen PUR-Pulverlacke gelöst. Es war überraschend, dass durch die Kombination von Polyharnstoff und Polyester auf Basis von Bernsteinsäure matte PUR-Pulverlacke mit hervorragenden Eigenschaften erhalten werden konnten.

Gegenstand der Erfindung sind matte Polyurethan-Pulverlacke enthaltend
A) 3 - 25 Gew.-% Polyharnstoff,
B) 35 - 75 Gew.-% mindestens eines Polyesters, aufgebaut aus Polyolen und 15-100 Mol-% Bernsteinsäure oder deren Anhydrid, mit einer OH-Zahl von 20-250 mg KOH/g;
C) 7 - 25 Gew.-% mindestens eines Härters auf der Basis von blockierten Polyisocyanaten, Isocyanuraten und/oder Uretdionen mit einer Funktionalität von mindestens 2;
D) 1 - 50 Gew.-% Hilfs- und Zusatzstoffe;
wobei pro OH-Gruppe des Harzes 0,6 bis 1,2 NCO-Gruppen zur Verfügung stehen.

Die erfindungsgemäßen PUR-Pulverlacke enthalten 3 - 25 Gew.-% Polyharnstoff. Üblicherweise weisen die Polyharnstoffe aus mindestens einem mindestens difunktionellen Amin und Isocyanat ein NCO/NH₂-Verhältnis von 0,9 bis 1,1 zu 1 auf.

Polyharnstoffe sind bekannt und werden beispielsweise beschrieben in:
Houben-Weyl E 20/2 (1987) Seite 1721 - 1751;
Houben-Weyl XIV/2 (1963) Seite 165 - 171.

Im Rahmen der Erfindung können alle spröden, hochschmelzenden Polyharnstoffe, z. B. solche aus aliphatischen, (cyclo)aliphatischen, cycloaliphatischen und aromatischen Diaminen und/oder Polyaminen (C₅ - C₁₈) und den entsprechenden oder auch anderen Isocyanaten (als Diisocyanate wie auch deren Oligomere, z. B. Isocyanurate) eingesetzt werden.

Besonders geeignet sind die Diisocyanate und/oder Isocyanurate von Isophorondiisocyanat (IPDI), Hexamethylendiisocyanat (HDI) und 4.4'-Dicyclohexylmethandiisocyanat (HMDI).

Eine bevorzugte Ausführungsform der Erfindung ist die Verwendung von Polyharnstoffen auf der Basis von nicht aromatischen Aminen und Isocyanaten, wie z. B. Isophorondiamin (IPD) und Isophorondiisocyanat (IPDI) und/oder HDI, wobei das Diisocyanat allein, als Isocyanurat und in solchen Mischungen einsetzbar ist. Die bevorzugt eingesetzten Polyharnstoffe sind in der EM 000104 (internes Aktenzeichen) offenbart.

Bei dem Polyester B) ist es erfindungswesentlich, dass dieser aus mindestens 15 bis maximal 100 Mol-% Bernsteinsäure aufgebaut ist. Als weitere Säuren werden die Folgenden bevorzugt eingesetzt: Adipinsäure, Tetrahydrophthalsäure, Iso- und Terephthalsäure, Trimellitsäure, Pyromellitsäure sowie die Anhydride der genannten Säuren.

Prinzipiell sind alle bekannten Polyole im Rahmen der Erfindung zur Herstellung des Polyesters B) geeignet. Geeignete Polyole werden z. B. in den DE-OSS 27 35 497 und 30 04 903 beschrieben.

Bevorzugt eingesetzte Polyole sind Ethylenglykol, 1,4-Butandiol, Hexandiol-1,6, Cyclohexandiol, Neopentylglykol, Bis-(1,4-hydroxymethyl)-cyclohexan.

Im Allgemeinen weist der Polyester B) eine OH-Zahl von 20-250 mg KOH/g und eine mittlere Molmasse von 3.000 - 8.000, bevorzugt 4.000 - 5.000, auf.

Als Härter C) auf der Basis von Polyisocyanaten sind prinzipiell die bekannten Härter auf dem Gebiet der Pulverlacke einsetzbar. Bevorzugt werden blockierungsmittelhaltige wie auch intern blockierte Polyisocyanate eingesetzt. Sie werden z. B. in der DE-OSS 21 05 777, 25 42 191, 27 35 497, 30 39 824, 30 30 572, 30 30 513 und 37 39 549, beschrieben.

So können die erfindungsgemäßen Pulverlacke Härter C), basierend auf blockierten Polyisocyanaten, blockierten Isocyanuraten und Uretdionen allein oder in Mischungen, enthalten. Bevorzugt werden die Ausgangskomponenten ausgewählt aus IPDI, HDI und HMDI.

Als Blockierungsmittel können die bekannten eingesetzt werden. Bevorzugt werden Caprolactam, Triazole, Oxime, Pyrazole eingesetzt.

Die in den erfindungsgemäßen PUR-Pulverlacken enthaltenen Hilfs- und Zusatzstoffe D) sind z. B. Verlaufsmittel, Pigmente, Füllstoffe und Katalysatoren. Diese sind üblicherweise in Mengen von 1- 50 Gew.-% enthalten.

Zur Herstellung der gebrauchsfertigen Pulverlacke werden der OH-funktionalisierte Polyester, der Isocyanat-basierende Härter, der Polyharnstoff, Verlaufsmittel, Pigmente und Füllstoffe miteinander bei Raumtemperatur gemischt und anschließend auf einem Extruder oder Kneter bei Temperaturen von 100-140 °C homogenisiert. Das Verhältnis von Harz zu Härter wird so gewählt, dass pro OH-Gruppe des Harzes 0,6 bis 1,2, vorzugsweise 0,8-1,0, NCO-Gruppen zur Verfügung stehen.

Nach dem Erkalten wird das Extrudat gebrochen, gemahlen und anschließend auf eine Korngröße < 100 µm abgesiebt. Das so hergestellte Pulver wird mit einer elektrostatischen Pulverspritzanlage bei 60 KV auf entfettete Eisenbleche appliziert und in einem Umlufttrockenschrank zwischen 160 bis 210 °C eingebrannt.

### Beispiele

Für die erfindungsgemäßen PUR-Pulverlacke werden OH-haltige Polyester eingesetzt, die als Säurekomponente mindestens 15 Mol-% Bernsteinsäure enthalten. Die Herstellung erfolgt nach bekannter Weise durch Kondensation von Polyolen und Polycarbonsäuren, wie z. B. in DE OSS 25 35 497 und 30 04 903 beschrieben.

| **Einsatzstoffe** | **Polyester** | | |
|---|---|---|---|
| | **PE 1** | **PE 2** | **PE 3** |
| Terephthalsäure | 75,0 Mol-% | - | 70,0 |
| Adipinsäure | 4,0 Mol-% | - | - |
| Bernsteinsäure | 21,0 Mol-% | 100 | 30,0 |
| 1,4-Butandiol | - | 100 | - |
| 1,4-Ethylenglykol | 10,0 Mol-% | - | 30,0 |
| Neopentylglykol | 88,0 Mol-% | - | 68,0 |
| Trimethylolpropan | 2,0 Mol-% | - | 2,0 |
| OH-Zahl | 33 mg KOH/g | 31,0 | 36,0 |
| SZ-Zahl | 3,0 mg KOH/g | 2,0 | 3,0 |

Eingesetzt wurden folgende Polyharnstoffe (PH) bestehend aus (Angabe in Gew.-%):

| **Einsatzstoffe** | **PH 1** | **PH 2** | **PH 3** |
|---|---|---|---|
| **IPD** | 36 | 28 | 34 |
| **IPDI** | 31 | - | - |
| **IPDI-Isocyanurat** | 32 | 72 | - |
| **HDI-Isocyanurat** | - | - | 66 |

Alle Produkte sind weiße, spröde und in üblichen Lösemitteln unlösliche Substanzen, die erst oberhalb von 250 °C unter Zersetzung schmelzen.

Aus den genannten Einsatzstoffen wurden, wie oben in der Beschreibung angegeben, Pulverlacke hergestellt und geprüft. Die dazu gehörenden technischen Angaben und Ergebnisse sind der folgenden Tabelle zu entnehmen.

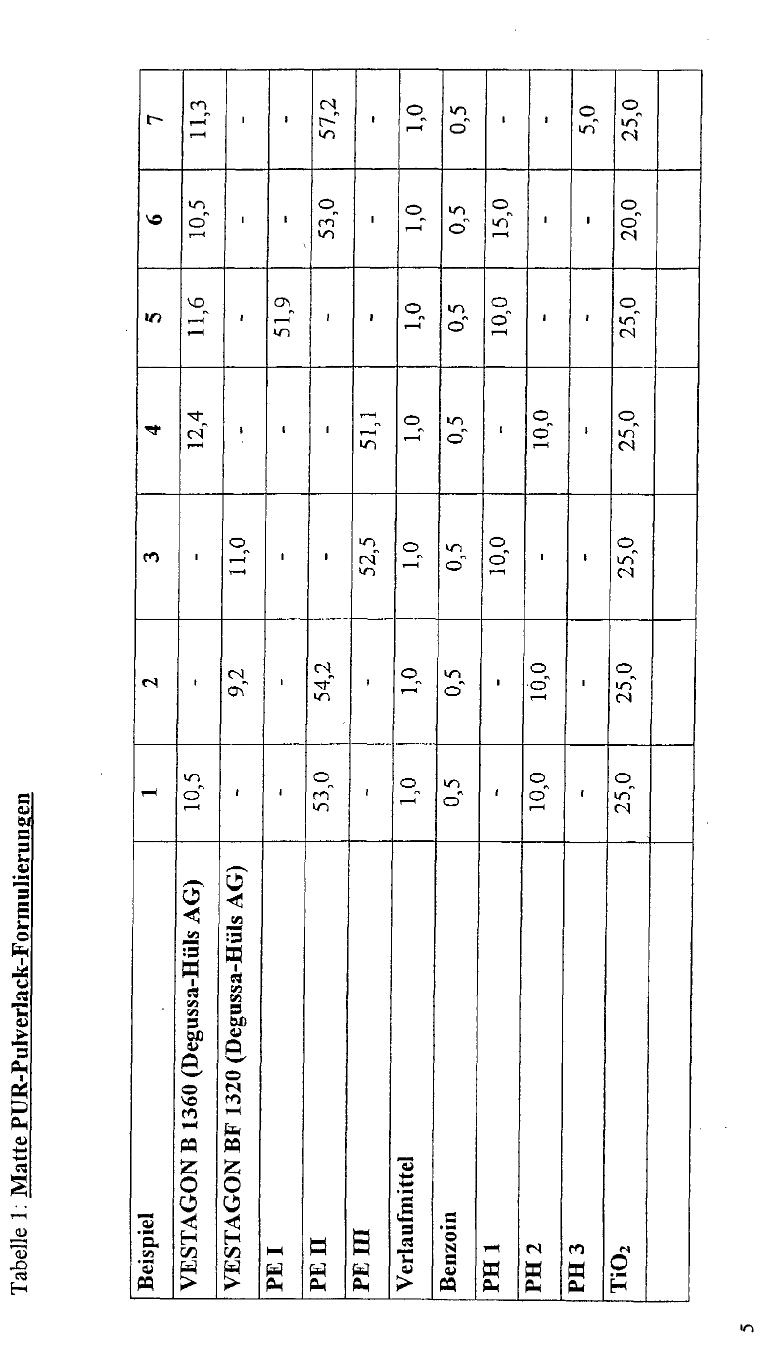

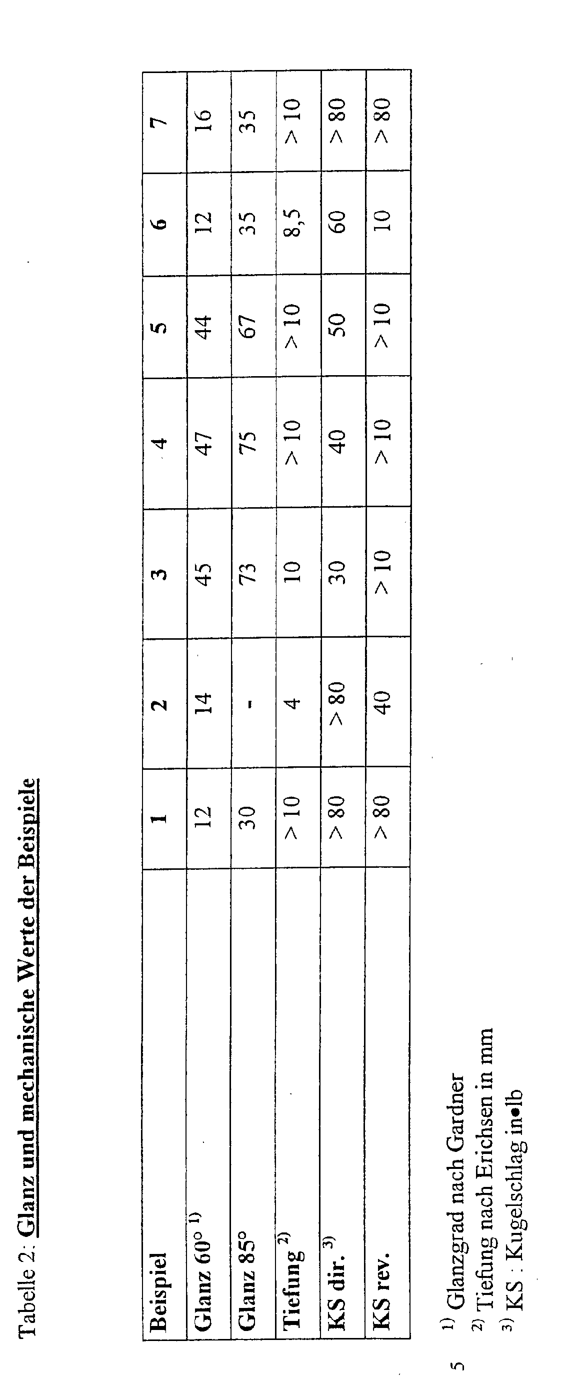

## Patentansprüche

1. Matte Polyurethan-Pulverlacke enthaltend
A) 3- 25 Gew.-% Polyharnstoff;
B) 35 - 75 Gew.-% mindestens eines Polyesters, aufgebaut aus Polyolen und 15-100 Mol-% Bernsteinsäure oder deren Anhydrid, mit einer OH-Zahl von 20-250 mg KOH/g;
C) 7 - 25 Gew.-% mindestens eines Härters auf der Basis von blockierten Polyisocyanaten und/oder Isocyanuraten und/oder Uretdionen mit einer Funktionalität von mindestens 2;
D) 1 - 50 Gew.-% Hilfs- und Zusatzstoffe;
wobei pro OH-Gruppe des Harzes 0,6 bis 1,2 NCO-Gruppen zur Verfügung stehen.

2. Matte Polyurethan-Pulverlacke nach Anspruch 1,
**dadurch gekennzeichnet,**
**dass** der Polyharstoff A) aus
mindestens einem mindestens difunktionellem Isocyanat und
mindestens einem mindestens difunktionellen Amin besteht, und ein NCO/NH₂-Verhältnis von 0,9 - 1,1 zu 1 aufweist.

3. Matte Polyurethan-Pulverlacke nach mindestens einem der Ansprüche 1 bis 2,
**dadurch gekennzeichnet,**
**dass** der Polyharnstoff aus einem Isocyanat und/oder Isocyanurat besteht.

4. Matte Polyurethan-Pulverlacke nach Anspruch 3,
**dadurch gekennzeichnet,**
**dass** das Isocyanat oder Isocyanurat aus IPDI, HDI und/oder HMDI ausgewählt wird.

5. Matte Polyurethan-Pulverlacke nach mindestens einem der Ansprüche 1 bis 4,
**dadurch gekennzeichnet,**
**dass** der Polyharnstoff aliphatische, (cyclo)aliphatische, cycloaliphatische, aromatische Diamine und/oder Polyamine mit 5-18 Kohlenstoffatomen enthält.

6. Matte Polyurethan-Pulverlacke nach Anspruch 5,
**dadurch gekennzeichnet,**
**dass** als Amin IPD enthalten ist.

7. Matte Polyurethan-Pulverlacke nach mindestens einem der Ansprüche 1 bis 6,
**dadurch gekennzeichnet,**
**dass** der Polyester B) aus mindestens einem der folgenden Polyolen aufgebaut ist: Ethylenglykol, 1,4-Butandiol, Hexandiol-1,6 Cyclohexandiol, Neopentylglykol, Bis-(1,4-hydroxymethyl)-cyclohexan.

8. Matte Polyurethan-Pulverlacke nach mindestens einem der Ansprüche 1 bis 7,
**dadurch gekennzeichnet,**
**dass** der Polyester B) neben Bernsteinsäure aus den folgenden Säuren aufgebaut ist: Adipinsäure, Tetrahydrophthalsäure, Iso- und Terephthalsäure, Trimellitsäure, Pyromellitsäure.

9. Matte Polyurethan-Pulverlacke nach mindestens einem der Ansprüche 1 bis 8,
**dadurch gekennzeichnet,**
**dass** Härter C) auf der Basis von blockierten Polyisocyanaten, blockierten Isocyanuraten und/oder Uretdionen der Diisocyanate IPDI, HDI und/oder HMDI enthalten sind.

10. Matte Polyurethan-Pulverlacke nach mindestens einem der Ansprüche 1 bis 9,
**dadurch gekennzeichnet,**
**dass** der Härter C) mit Blockierungsmittel ausgewählt aus Caprolactam, Triazolen, Oximen, Pyrazolen blockiert ist.

11. Matte Polyurethan-Pulverlacke nach mindestens einem der Ansprüche 1 bis 10,
**dadurch gekennzeichnet,**
**dass** als Hilfs- und Zusatzstoffe D) Verlaufsmittel, Pigmente, Füllstoffe und Katalysatoren eingesetzt werden.
